# EUROPEAN PATENT APPLICATION

(11) **EP 1 319 939 A1**
(43) Date of publication of application: **18.06.2003**
(21) Application number: 01967772.3
(22) Date of filing: 21.09.2001
(51) Int. Cl.: G01N 21/47

(54) **CONCENTRATION MEASURER**

(30) Priority: 22.09.2000 JP 2000288939; 13.02.2001 JP 2001035012
(71) Applicant: Organo Corporation, Tokyo 136-8631 (JP); TOMOE ENGINEERING CO. LTD., Chuo-ku, Tokyo 103-0027 (JP); Shibaura Systems Co., Ltd, Tokyo 151-0051 (JP); Miyazawa, Yuzo, Tokyo 160-0023 (JP)
(72) Inventor: MIYAZAWA, Yuzo, c/o TOKYO METROPOL. GOV., Shinjuku-ku, Tokyo 160-0023 (JP); HARADA, Toshio, c/o TOKYO METROPOL., Chiyoda-ku, Tokyo 100-0004 (JP); HAYASHI, Tomoyuki, c/o ORGANO CORPORATION, Koto-ku, Tokyo 136-8631 (JP); YANO, Saihei, c/o TOMOE ENGINEERING CO., LTD, Chuo-ku, Tokyo 103-0027 (JP); SATO, Shigeo, c/o MEIDENSHA CORPORATION, Shinagawa-ku, Tokyo 141-0032 (JP); IMAZU, Tsuneo, c/o AUTOMATIC SYSTEM RES. CO., LTD, Chiyoda-ku, Tokyo 101-0032 (JP); SAKAI, Takahiro, c/o SHIBAURA SYSTEMS CO., LTD, Shibuya-ku, Tokyo 151-0051 (JP); KONO, Kinichiro, c/o TOKYO METROPOL. GOV., Shinjuku-ku, Tokyo 160-0023 (JP)
(74) Representative: Blake, John Henry Francis
(86) International application number: JP0108222
(87) International publication number: WO02025254

(57) **Abstract**

A concentration measurer for measuring the concentration of turbidities in object liquid by detecting the diffuse reflection light of a laser beam emitted to the object liquid, comprising a concentration detecting part formed by bundling a plurality of optical fibers for laser beam emission and a plurality of optical fibers for laser beam receiving. In this measurer, a body part having an emitter and a receiver for the laser beam and the concentration detecting part can be formed separately from each other, and the body part and the concentration detecting part can be connected by flexible optical fibers. By this measurer, a concentration up to a high turbidity concentration can be measured with high sensitivity and, when the concentration detecting part is formed separately from the body part, the concentration detecting part can be easily installed even in a restricted area and an adverse environment.

## Description

### Technical Field of the Invention

The present invention relates to a concentration measurer which measures a concentration of turbidities in an object liquid such as a sludge concentration in drainage generated from a plant for treatment of sewage, waste water, human waste, etc. and a solid concentration in treated water, and specifically to a concentration measurer which measures a concentration of turbidities by a diffuse reflection system using a laser beam.

### Background Art of the Invention

As conventional methods for measuring a concentration of turbidities in an object liquid, known are an ultrasonic system, an infrared system, a microwave system, a dry weight system, etc. In such methods, however, when the nature of the turbidities to be measured changes, or when the concentration thereof varies, there is a problem that an output becomes unstable except in a dry weight system. If such an unstable information of the concentration is transmitted and inputted into peripheral equipment or devices, there may be a possibility of causing a malfunction of a monitoring system or a treatment system. Further, in a dry weight system, there are problems such as a long time for measurement, necessity of setting a drying condition, and generation of waste after measurement.

Further, in the concentration measurers using an ultrasonic system, an infrared system and a microwave system, in order to stabilize an output as much as possible, usually they are formed as a structure wherein an emitting part and a receiving part of a measurement wave, which decreases in proportion to the amount of particles in an object liquid provided as an object to be measured, are integrally formed, i.e., wherein these emitting and receiving parts are contained in a single concentration measurer. In such an integral structure, because the size of the concentration measurer, especially the size in its longitudinal direction, becomes large, not only an installation place therefor is restricted, but there is a problem that a wide surrounding space for maintenance must be allowed. Such problems become serious, particularly in a place having a narrow space for installation, or in a place in an environment not suitable for installation (for example, a place where an intense corrosion is liable to occur, or a place in adverse atmosphere).

Alternatively, a beam transmission system is known as another method for measuring the concentration of turbidities, wherein a laser beam is irradiated into an object liquid and the amount of laser beam transmitted through the object liquid is detected. However, in this method, when the concentration of turbidities is at a high concentration of 1% or more, particularly, at a concentration of about 3% or more, it is difficult to measure the high concentration with a high optical sensitivity, and therefore, a high-accuracy measurement is difficult. This is because, the color of turbidities (for example, sludge) is blackish or the like in many cases, and since the laser beam is likely to be absorbed, the laser beam is greatly attenuated and a high-sensitivity measurement becomes difficult.

In order to solve such a problem inherent in the laser beam transmission system for a high concentration measurement, it is considered to be effective to employ a method for detecting a reflected light of the laser beam irradiated into the object liquid. This system is also called as a diffuse reflection system, because most laser beams irradiated into an object liquid hit turbidities in the object liquid and are diffused, and after the diffusion, they are reflected. If a diffuse reflection light is detected, since it is less likely to be influenced by the color of turbidities, the turbidity measurement of an object liquid with a relatively high concentration of turbidities may be possible.

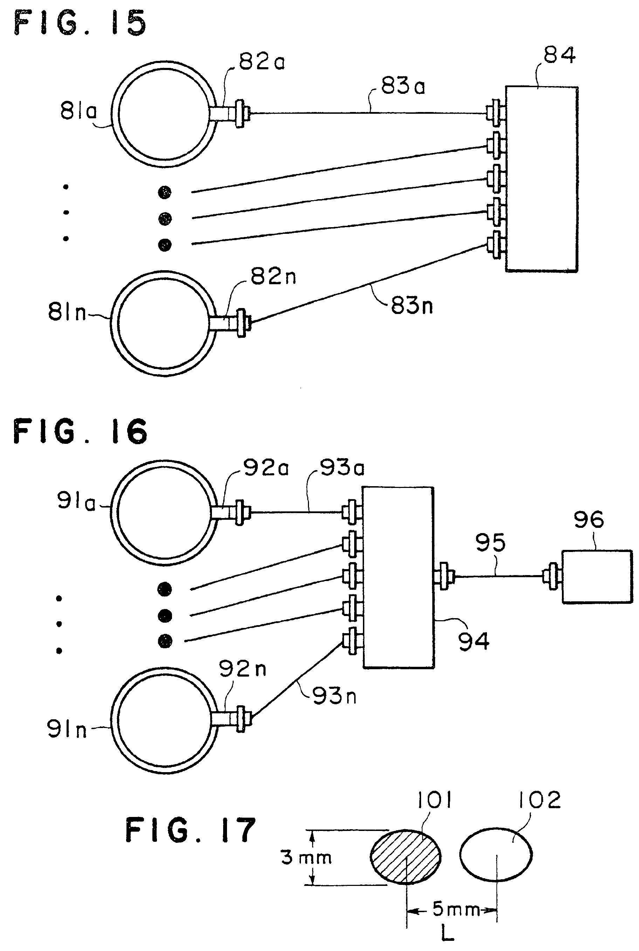

However, in a conventional concentration measurer of the diffuse reflection system using a laser beam as schematically shown in Fig. 17 for example, since a light guide end surface 101 for emitting a laser beam and a light guide end surface 102 for receiving a laser beam in a concentration detecting part are formed relatively large (for example, about 3 mm φ), the optical light span L therebetween becomes relatively large (for example, about 5 mm). Therefore, it is difficult to detect the diffuse reflection light at a sufficient amount under a condition with little light attenuation, and it is difficult to raise the measurement sensitivity optically.

### Disclosure of the Invention

Accordingly, an object of the present invention is to provide a concentration measurer capable of measuring a concentration of turbidities up to a high concentration (for example, up to a concentration of 1% or more, particularly, up to a concentration of 3% or more) with a high sensitivity, retaining the advantages of the diffuse reflection system using a laser beam.

Another object of the present invention is to desirably solve the aforementioned problems with respect to the restriction of a place for installation of a concentration measurer and the necessity of a space for maintenance while keeping the advantages of the diffuse reflection system using a laser beam, and to provide a concentration measurer suitable for measurement of a sludge concentration, etc., which can measure a concentration of turbidities up to a high concentration with a high sensitivity and of which concentration detecting part for directly detecting the concentration can be easily installed even in a restricted area and an adverse environment.

To accomplish the above objects, the present invention provides a concentration measurer for measuring a concentration of turbidities in an object liquid by detecting a diffuse reflection light of a laser beam emitted to the object liquid, characterized in that a single concentration detecting part is formed by bundling a plurality of optical fibers for laser beam emission and a plurality of optical fibers for laser beam receiving.

The optical fibers for beam emission and the optical fibers for beam receiving are both bundled at a relatively large number, and for example, optical fibers of 100 threads or more are bundled as the total number of both optical fibers. The total number of optical fibers may be appropriately decided in accordance with the nature of the turbidities in the liquid to be measured in concentration and the range of the concentration, the fiber diameter of one optical fiber used, the size of a sensing surface, etc., and it may be selected from the range of about 100 to about 50,000 threads. The diameter of each optical fiber may selected, for example, from the range of 20 to 80 µm. With respect to the diameter of the sensing surface, the maximum value is roughly decided mechanically because a sensing part is usually attached to a pipe, etc., and it may be appropriately decided, for example, from the range of about 3 to about 15 mm. If the diameter of each optical fiber and the size of the sensing surface are decided, the maximum value of the number of the optical fibers to be bundled will be almost decided.

As the arrangement form of the optical fibers for beam emission and the optical fibers for beam receiving to be bundled, particularly the arrangement at a sensing surface, which directly emits and receives beam, is important. Although various kinds of forms can be employed for this arrangement, as shown in embodiments described later, the characteristics of concentration measurement of are slightly different from each other depending on employed arrangement forms.

As an arrangement form which can be employed, for example, a form, wherein at a sensing surface of the concentration detecting part, the optical fibers for beam emission and the optical fibers for beam receiving are randomly arranged, can be employed. Since the output of the received laser beam, that is, the amount of received beam, exhibits the largest value in this random arrangement form, this form is most preferable. However, the arrangement form is not restricted to this random arrangement form, and another form may be employed wherein at a sensing surface of the concentration detecting part the optical fibers for beam emission are arranged in a central portion of the sensing surface and the optical fibers for beam receiving are arranged around the optical fibers for beam emission. Further, a form may be employed wherein at a sensing surface of the concentration detecting part the optical fibers for beam receiving are arranged in a central portion of the sensing surface and the optical fibers for beam emission are arranged around the optical fibers for beam receiving. Furthermore, a form may be employed wherein at a sensing surface of the concentration detecting part the optical fibers for beam emission are arranged in a half of the sensing surface and the optical fibers for beam receiving are arranged in the other half of the sensing surface.

Although it is possible to use a continuously supplied laser beam as the laser beam supplied to the optical fibers for beam emission, a great reduction of power consumption becomes possible by using a laser beam supplied by pulse driving. Further, as a laser beam source, although it is possible to use a usual light emitting diode (LED), it is more preferable to use a laser beam emitting diode which has a wavelength region suitable for laser beam emission and a high intensity in the specific wavelength region. As compared with other light sources, such a laser beam emitting diode is small and the intensity of the source is very high, the wavelength of the beam is in a condition of a monochromatic light and the selectivity based on a wavelength is high, and therefore, an excellent reproducibility in concentration measurement can be ensured, and besides, it has a long useful life. Moreover, when it is pulse driven, the frequency of the laser beam to be emitted can be easily set up and controlled accurately at target value and condition.

Further, in the concentration measurer according to the present invention, in order to particularly solve the problems about restriction of the installation place for the measurer and about the space for maintenance while retaining a high performance, the following structure can be employed. Namely, a structure can be employed wherein a body part having at least an emitter and a receiver for laser beam and the above-mentioned concentration detecting part directly emitting the laser beam to an object liquid and directly receiving a reflected light from the object liquid are formed separately from each other, and the body part and the concentration detecting part are connected to each other by flexible optical fibers. As the flexible optical fibers, the above-mentioned plurality of bundled optical fibers for laser beam emission and for laser beam receiving may be used as they are.

In such a form, it is preferred that the flexible optical fibers are incorporated into a flexible tube and a cable structure covered with the flexible tube is formed. By such a structure, even when the flexible optical fibers are extended in an adverse environment, they can be protected by the covering tube.

Further, in the body part, a laser beam emission circuit connected to an emitter, a received light amplification circuit connected to a receiver and so forth can be contained, together with the emitter and the receiver. Namely, parts except the concentration detecting part connected via the flexible optical fibers are separated as the body part.

In the concentration measurer according to the present invention described above, because the concentration measurement is premised on a diffuse reflection system using a laser beam, as compared with a beam transmission system, the measurement is less likely to be influenced by the color of turbidities, and basically, measurement up to a relatively high concentration is possible at a high sensitivity. Moreover, since many optical fibers for laser beam emission and optical fibers for laser beam receiving are bundled to form a single concentration detecting part, even if each optical fiber is thin and small in an amount of beam emission or receiving, a sufficiently large amount of beam emission and receiving as the total amount can be achieved. Further, since each optical fiber is thin, in a case of the random arrangement for example, the light span between adjacent optical fiber for beam emission and optical fiber for beam receiving in the sensing surface becomes very small, and the optical sensitivity for concentration measurement is greatly increased. As a result, it becomes possible to measure a concentration at a high sensitivity and a high accuracy from a low concentration to a high concentration of 1% or more, further, of 3% or more, and it becomes possible to measure a concentration at a good followability and stably at a high accuracy even when the nature or the concentration of turbidities varies.

Further, by employing a structure in which the concentration detecting part is separated from the body part, the concentration detecting part itself can be formed very small. For example, the diameter of a glass or lens surface forming the laser beam emitting and receiving surface can be designed in a range of about 10 to about 20 mm, and the length of the concentration detecting part can be designed in a range of about 20 to about 30 mm. If such a small concentration detecting part is formed, it can be easily installed even in an extremely narrow space or a place which has been difficult to install a conventional measurer.

The light guiding of laser beam to this concentration detecting part and the light guiding of the reflected light from the concentration detecting part are performed via the optical fibers between the part and the body part. Because the optical fibers are flexible, a particular restriction disappears on the installation place and the installation posture of the body part. Further, if the length of the flexible optical fibers is adequately set, the body part can be installed at another place in a good environment separate from a place where the concentration detecting part is installed, even when the concentration detecting part is installed in an adverse environment such as a place exuding an offensive odor. Therefore, the operation environment of the body part including electronic/electric devices and optical devices can be maintained to be good, and the maintenance space for the body part can be easily secured. For the concentration detecting part, a minimum space for inspection needs to be secured.

Further, since the body part and the concentration detecting part are formed separately from each other, a major weight of the entire system is accounted for by the body part, thereby greatly simplifying the installation work of the concentration detecting part. No constraint is imposed on the installation of the body part and therefore no problem in installing the body part.

Furthermore, since an apparatus of diffuse reflection system capable of detecting at a high sensitivity can be constructed as the whole of the concentration measurer, the advantages based on the above-described separation structure can be secured, and at the same time, the desirable performance as a high-sensitivity concentration measurer can be achieved.

Thus, in the concentration measurer according to the present invention, a concentration can be measured at extremely high sensitivity and high accuracy from a low concentration to a high concentration of 1% or more, further, of 3% or more, of turbidities, retaining the advantage of the diffuse reflection system of laser beam that the measurement is less likely to be influenced by the color of the turbidities. Further, as a result of such a possible high-sensitivity measurement, it becomes possible to follow the variation of the nature or the concentration of turbidities, and a stable concentration measurement over an extended period of time becomes possible. Furthermore, since the sensing surface and beam emission and beam receiving elements are connected by many optical fibers, the shape therebetween can be set at a substantially arbitrary shape utilizing the flexibility of the optical fibers, and an optimum form for the measurer can be easily realized depending on an installation place.

In particular, by employing a structure in which the body part and the concentration detecting part are separated from each other, a high-sensitivity measurement performance can be achieved, and at the same time it becomes possible to easily attach the concentration detecting part, which is structured small, even to a place under an adverse environment where it has been difficult to install a measurer or even to a place which has only a narrow space difficult for working, and it becomes possible to install the body part, which is relatively large and which contains optical devices and electronic/electric devices, at a separate place safe and good in environment. Consequently, an excellent performance of the measurer can be maintained stably for a long term.

### Brief explanation of the drawings

Figure 1 is a schematic view of a concentration measurer according to a first embodiment of the present invention.
Figure 2 is a schematic sectional view of a measurer, showing an example in which the measurer depicted in Fig. 1 is structured in a sensor form.
Figure 3 is a schematic view of a sensing surface, showing an example of arrangement form of optical fibers according to the present invention.
Figure 4 is a schematic view of a sensing surface, showing another example of arrangement form of optical fibers according to the present invention.
Figure 5 is a schematic view of a sensing surface, showing a further example of arrangement form of optical fibers according to the present invention.
Figure 6 is a schematic view of a sensing surface, showing a still further example of arrangement form of optical fibers according to the present invention.
Figure 7 is an explanation view showing a light span in an example according to the present invention.
Figure 8 is an explanation view showing a laser pulse drive in an example according to the present invention.
Figure 9 is a graph of output data obtained in an experiment that was carried out for confirming the advantages according to the present invention.
Figure 10 is a schematic view of a concentration measurer according to a second embodiment of the present invention.
Figure 11 is a schematic sectional view of a measurer, showing an example in which the measurer depicted in Fig. 10 is structured more concretely.
Figure 12 is a schematic view showing an example of disposition of a concentration measurer according to the present invention (Example 1).
Figure 13 is a schematic view showing another example of disposition of a concentration measurer according to the present invention (Example 2).
Figure 14 is a schematic view showing another example of disposition of optical fibers of a concentration measurer according to the present invention (Example 3).
Figure 15 is a schematic view showing a further example of disposition of a concentration measurer according to the present invention (Example 4).
Figure 16 is a schematic view showing a still further example of disposition of a concentration measurer according to the present invention (Example 5).
Figure 17 is an explanation view showing an example of a light span in a conventional measurer.

### The Best mode for carrying out the Invention

Hereinafter, desirable embodiments of the present invention will be explained referring to figures.

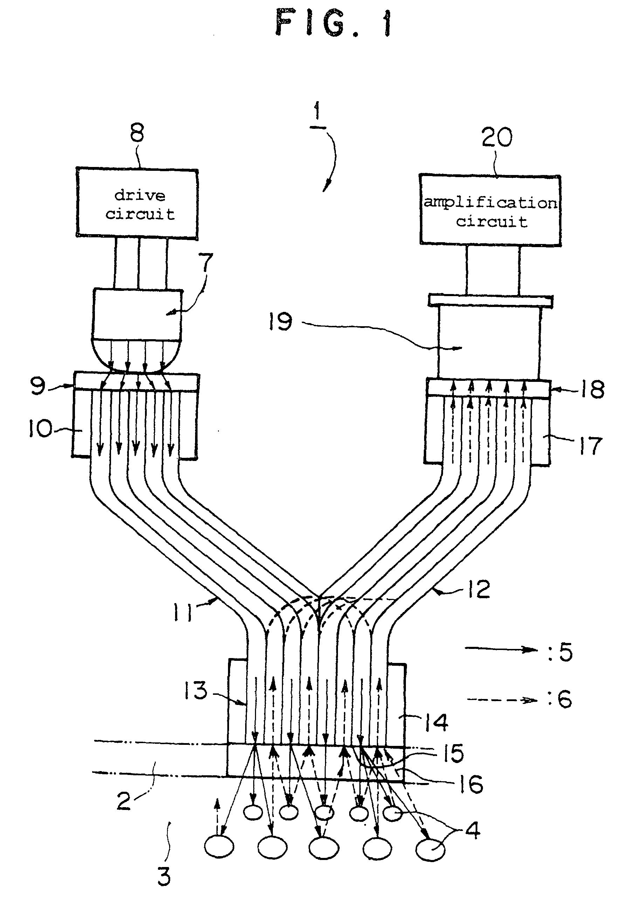

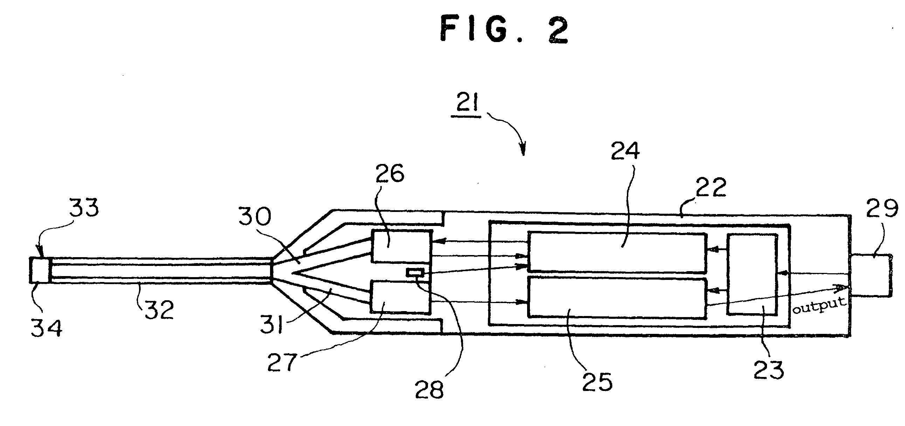

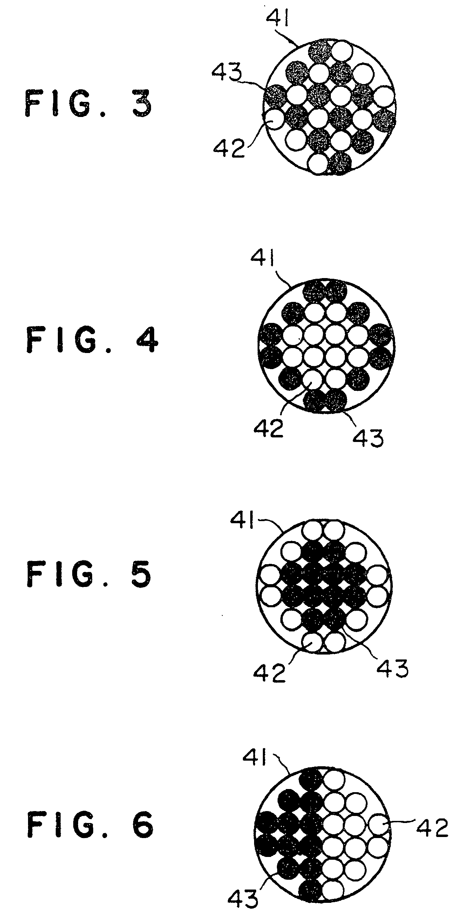

Fig. 1 shows a basic structure of a concentration measurer according to a first embodiment of the present invention, Fig. 2 shows an example in which the measurer is structured as a concrete concentration sensor, and Figs. 3-6 show various examples of the arrangement forms of optical fibers in the sensing surface, respectively.

In Fig. 1, numeral 1 shows the whole of a concentration measurer, the concentration measurer 1 is structured as a sensor form, and its tip portion is attached so as to be faced into a pipe 2. Concentration measurer 1 is constructed as concentration measurer of diffuse reflection system which measures a concentration of turbidities 4 in an object liquid 3 by detecting diffuse reflection light 6 of laser beam 5 which is emitted toward the turbidities 4 (for example, sludge particles) in the object liquid 3 flowing in the pipe 2.

In this embodiment, a laser beam emitting diode 7 (sometimes, abbreviated as "laser diode"), which emits a laser beam high in intensity in a specific wavelength region suitable for laser beam emission, is used as a laser beam source, and a laser beam is emitted in a predetermined pulse form by pulse driving controlled by a drive circuit 8 with an oscillator. The laser beam emitted by laser beam emitting diode 7 is introduced, via a laser beam diffusion plate 9, into the incident ends of many optical fibers for beam emission 11 bundled and retained by an optical fiber fastener 10. The laser beam is introduced into the incident ends of optical fibers for beam emission 11 at a uniformly diffused condition by the laser beam diffusion plate 9.

Many optical fibers for beam emission 11, and many optical fibers for beam receiving 12 substantially having the same number of optical fibers 11, are bundled to form a single concentration detecting part 13. The bundled optical fibers for beam emission 11 and optical fibers for beam receiving 12 are retained in, for example, a fastener 14, at a condition that the relative positions thereof are fixed, and end surfaces of the respective optical fibers are arranged to form a sensing surface 15. The laser beam guided in optical fibers for beam emission 11 and emitted from the irradiation ends of the optical fibers 11 is irradiated into the object liquid 3 from sensing surface 15, and the laser beam hitting the turbidities 4 in the object liquid 3 and diffuse-reflected therefrom is received at incident ends of optical fibers for beam receiving 12. In this embodiment, the emitting and receiving of laser beam at this sensing surface 15 are carried out through a glass plate 16 provided on the sensing surface 15. Although the material of glass plate 15 is not particularly restricted, a sapphire glass, which is hard to be scratched, chemically stable and excellent in acid resistance, alkali resistance and solvent resistance, and thermally stable, is preferred. Further, it is preferred to finish the surface of this glass plate 15 at a side facing the object liquid 3 into a mirror surface condition, because any foulants from sludge are less likely to adhere to the mirror surface and this mirror surface is less liable to scratches ascribed to sludge. Although the glass plate 16 formed as a flat plate is depicted in Fig. 1, instead of such a glass plate 16, it is also possible to use a lens having an appropriate focal length. As such a lens, it is preferred to use a plano-convex lens of which the side of the sensing surface is formed as a flat surface, the other side is formed as a convex surface and whereby a lens function is given.

The diffuse reflection light of the laser beam received at the incident ends of optical fibers for beam receiving 12 is guided in the optical fibers 12 and then irradiated from the irradiation ends opposite to the incident ends. Also on the side of the irradiation ends of optical fibers for beam receiving 12, many optical fibers for beam receiving 12 are retained at a condition bundled by an optical fiber fastener 17.

In this embodiment, the diffuse reflection light irradiated from the irradiation ends of optical fibers for beam receiving 12 is received by a photodiode 19 provided as a reflected light receiving element through a visible light cutting filter 18, and the amount of the light is detected. It is possible to suppress the influence to the concentration measurement due to a disturbing light (for example, a disturbing light from a fluorescent lamp) by disposing this visible light cutting filter 18. In this embodiment, the signal of the amount of the received light of photodiode 19 is outputted as a signal having a scale suitable for concentration measurement, by being amplified by an amplification circuit 20.

Fig. 2 shows an example in which the concentration measurer 1 having the above-described basic construction is structured in a form of a single concentration measuring sensor. In a concentration measuring sensor 21 shown in Fig. 2, a stabilization power source 23 as a power source for the sensor, a laser beam emission circuit 24 including a laser diode drive circuit and an optical feedback compensation circuit, a received light amplification circuit 25 having a function equivalent to that of amplification circuit 20 depicted in Fig. 1, a laser beam emitting diode 26, and a photodiode 27 for beam receiving are provided in a sensor body casing 22, and further in this embodiment, a thermistor 28 is provided for carrying out the thermal compensation for the laser beam emitting diode 26. Input and output of signals are carried out via a connector 29 provided on an end of body casing 22.

Many optical fibers for beam emission 30 guiding the laser beam from laser beam emitting diode 26 and optical fibers for beam receiving 31 guiding the received reflected light to photodiode 27 are bundled in a predetermined arrangement form and fixed and retained by an optical fiber protecting tube 32, and the tip portions of the optical fibers are arranged in a predetermined arrangement form at a sensor tip portion 33 to form a sensing surface. Although optical fiber protecting tube 32 is formed as a straight tube in this embodiment, since many optical fibers bundled in the tube have flexibility, it is possible to form the tube as a bent tube or a longer tube, as needed. Sensor tip portion 33 has a cap 34 detachable by a screw, and in this portion, glass plate 16 as depicted in Fig. 1 is provided. By employing such a screw cap system, it can be easily exchanged as required (for example, for a case where the glass plate is scratched.). Further, since there may be a case that the optical fibers change in optical transmission property by a strain ascribed to a vibration and the change may induce a noise, in order to prevent this, any such vibration of the optical fibers is eliminated by charging a foamed rubber (for example, a foamed silicone rubber) into optical fiber protecting tube 32. If the optical fibers are fixed in optical fiber protecting tube 32 by charging an epoxy resin, an acrylic resin, etc. thereinto, since the thermal expansion of the charged resin influences the optical fibers and it may cause a thermal drift, it is preferred to protect the optical fibers by the above-described foamed rubber which has high resiliency and flexibility and which can absorb the thermal expansion within the range of its own volume. Although many fine optical fibers are bundled in a multicore style at sensor tip portion 33, at this portion the optical fibers may be bonded and fixed to a metal fastener by, for example, a special epoxy resin excellent in thermal resistance, etc., and the tip surface thereof may be polished to form a sensing mirror surface.

As for the arrangement of optical fibers for beam emission and optical fibers for beam receiving at a sensing surface of the concentration detecting part, various forms can be employed as shown in Figs. 3 to 6. In an arrangement form shown in Fig. 3, optical fibers for beam emission 42 (shown by white circles) and optical fibers for beam receiving 43 (shown by black circles) are randomly arranged at a circular sensing surface 41, and it is preferred that the respective optical fibers are arranged uniformly as shown in Fig. 3, namely, so that the respective optical fibers for beam emission 42 and optical fibers for beam receiving 43 are arranged adjacent to each other. As understood from the experiment described later, this random arrangement form is most preferable from the viewpoints of the property and the size of the output for concentration measurement.

In an arrangement form shown in Fig. 4, at sensing surface 41, optical fibers for beam emission 42 are arranged in the central portion and optical fibers for beam receiving 43 are concentrically arranged around the optical fibers 42. In an arrangement form shown in Fig. 5, at sensing surface 41, optical fibers for beam receiving 43 are arranged in the central portion and optical fibers for beam emission 42 are concentrically arranged around the optical fibers 43. In an arrangement form shown in Fig. 6, at sensing surface 41, optical fibers for beam emission 42 are arranged in a half surface, that is, in one semicircular portion of the sensing surface, and optical fibers for beam receiving 43 are arranged in the other half surface, that is, in the other semicircular portion of the sensing surface. In any of the arrangement forms shown in Figs. 3 to 6, a sufficiently excellent property for concentration measurement aimed in the present invention can be obtained as shown in the result of the experiment described later.

Figs. 3 to 6 are depicted schematically, and the actual total number of the optical fibers at the sensing surface is set at a number much greater than that shown in the figures, and the number is appropriately selected from the range of a total number of 100 to 50,000. Even if each optical fiber is an extremely fine fiber and a monocore form lacks in optical amount and therefore a measurement is impossible, a sufficiently great optical amount for beam emission and receiving can be obtained, for example, by setting the number of optical fibers for beam emission at about 1500 and the number of optical fibers for beam receiving at about 1500, for a total of about 3000.

The operation and advantages of the concentration measurer according to the present invention described above will be explained, referring to the structure shown in Fig. 1.

Since many optical fibers for beam emission 11 and optical fibers for beam receiving 12 are bundled to form a single concentration detecting part 13 and these optical fibers are arranged in a predetermined form at sensing surface 15, even if each optical fiber is thin and its optical amount for beam receiving is small, totally a sufficiently great optical amount for beam emission and receiving can be obtained by bundling many fibers. As a result, occurrence of a lack in optical amount for either beam emission or beam receiving is avoided in the concentration measurement, and a necessary and sufficiently great optical amount can be obtained for achieving a high-sensitivity measurement. More specifically, a sufficiently great optical amount can be obtained by setting the number of the optical fibers in the range of 100 to 50,000, particularly, at a total number of more than 1000, more preferably at a total number of about 3000.

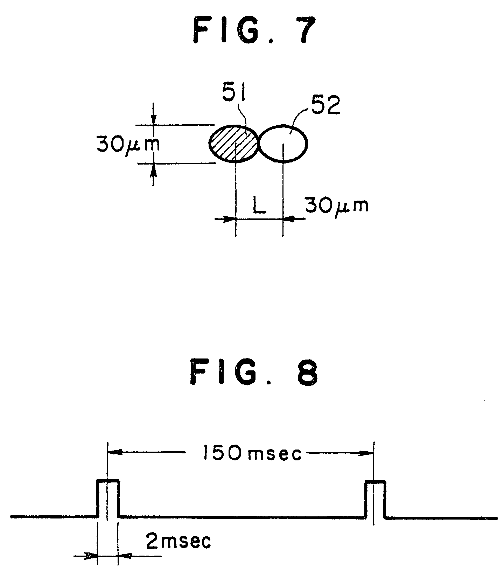

Further, because each of many bundled optical fibers for beam emission 11 and optical fibers for beam receiving 12 is an extremely fine optical fiber, the light span in the concentration measurement can be decreased down to a value close to a limit. For example, in the aforementioned random arrangement form shown in Fig. 3, when the diameter of each optical fiber is 30 µm for example, as shown in Fig. 7, a light span L between optical fiber for beam emission 51 and optical fiber for beam receiving 52 adjacent to each other becomes about 30 µm, and therefore, an extremely small light span can be obtained. As a result, as compared with the form having a light span of about 5 mm as shown in Fig. 17, the rate between both light spans surprisingly becomes 30:5000 = 1:167. Namely, as a sensitivity for optical concentration measurement, a sensitivity of 167 times as high as that of the form as shown in Fig. 17 can be obtained. As the result of such a great increase in sensitivity, it becomes possible to measure not only a low concentration of turbidities, but also, a high concentration of turbidities up to higher than 1%, particularly up to higher than 3%, further up to higher than 5%, with a high sensitivity. Moreover, because of the high sensitivity, the measurement can well cope with any change in the nature or concentration of turbidities, and therefore, a stable and high-accuracy concentration measurement becomes possible.

Further, since not a usual LED but a laser beam emitting diode 7 emitting an intense laser beam in a specified wavelength region is used as the laser beam source, as compared with other beam sources, a sufficiently high intensity can be obtained also as a beam source, and an excellent reproducibility can be obtained as well as an aimed frequency can be precisely obtained during pulse driving, and further, an excellent property for the pulse driving capable of sharply performing a desired beam emission can be obtained.

The pulse drive of laser beam is controlled, for example, as shown in Fig. 8. In this example, the laser beam is driven by a pulse with a pulse width of 2 msec, and the pulse interval is set at 150 msec. Therefore, the duty ratio is 1:75, and as compared with a case of continuous emission, the consumed power becomes 1.33% and power saving can be achieved. However, Fig. 8 merely shows an example, and these pulse width, pulse interval and duty ratio can be freely set in accordance with a required property of the pulse drive.

Further, if laser beam emitting diode 7 is controlled by means of the feedback system of its pulse beam, the laser pulse beam can be stabilized. In a case of a semiconductor laser diode, because the beam intensity greatly varies depending on the variation of the temperature of the environment, temperature compensation must be carried out, but in a case of laser beam emitting diode 7, a stable pulse beam emission becomes possible only by the above-described beam feedback system. However, in a case where a further stabilization is aimed and a case where a lack in compensation may occur only by the beam feedback system, temperature compensation by a thermistor, etc. may be carried out.

Thus, in the concentration measurer according to the present invention, an extremely high sensitivity can be realized, and it becomes possible to measure the concentration of turbidities in the object liquid at a high sensitivity up to a concentration in a high concentration region of higher than 1% or 3%.

The following experiment was carried out in order to investigate the performance of the concentration measurer according to the present invention.

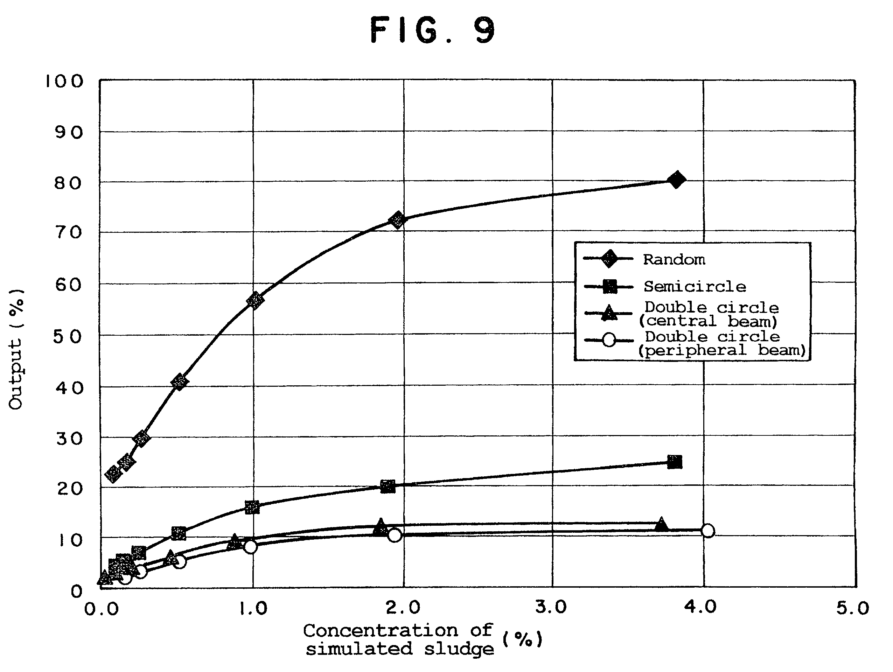

Using a measurer equivalent to the measurer shown in Fig. 2, the respective arrangement forms shown in Figs. 3 to 6 were set as the arrangement forms of the optical fibers at the sensing surface, and using samples prepared by mixing a simulated sludge in an object liquid and adjusting the concentration at various concentrations, the property in the concentration measurement (the property of the output (output voltage) corresponding to the measured concentration) was determined. Although yeast was used as the simulated sludge in this experiment, the simulated sludge is not limited thereto, and formazine, Solka-Floc (produced by a U.S. company "Brown Company"), kaoline, etc. can also be used. The diameter of the sensing surface was set at 10 mm φ, and a sapphire glass flat plate with a thickness of 1 mm was attached onto the sensing surface for the measurement. The result is shown in Table 1 and Fig. 9. In Table 1 and Fig. 9, "Random" corresponds to the arrangement form shown in Fig. 3, "Double circle (central beam)" corresponds to the arrangement form shown in Fig. 4, "Double circle (peripheral beam)" corresponds to the arrangement form shown in Fig. 5, and "Semicircle" corresponds to the arrangement form shown in Fig. 6, respectively. The output data in Table 1 and Fig. 9 are expressed as the ratios relative to a full scale after the amplification circuit (the percentage ratio using the full scale as 100%), and Table 1 and Fig. 9 show the relationship between the outputs and the concentrations of the simulated sludge (%).

**Table 1**

| Double circle (central beam) | | Double circle (peripheral beam) | | Semicircle | | Random | |
|---|---|---|---|---|---|---|---|
| Concentration | Output | Concentration | Output | Concentration | Output | Concentration | Output |
| 3.74 | 12.40 | 4.04 | 11.00 | 3.83 | 24.40 | 3.83 | 80.00 |
| 1.85 | 11.80 | 1.94 | 10.40 | 1.90 | 19.80 | 1.95 | 71.80 |
| 0.87 | 9.20 | 0.98 | 8.20 | 0.99 | 15.80 | 1.01 | 56.40 |
| 0.46 | 6.00 | 0.52 | 5.20 | 0.52 | 10.80 | 0.51 | 40.60 |
| 0.20 | 3.80 | 0.26 | 3.20 | 0.26 | 7.00 | 0.26 | 29.40 |
| 0.10 | 2.60 | 0.16 | 2.20 | 0.15 | 5.20 | 0.16 | 24.60 |
| 0.03 | 2.20 | 0.08 | 2.00 | 0.11 | 4.40 | 0.08 | 22.60 |

As shown in Table 1 and Fig. 9, any arrangement form has a linearity necessary and sufficient for a high-accuracy measurement ranging from a low concentration to a high concentration, and it has been proved that a concentration measurer using any of the arrangement forms of optical fibers at the sensing surface can serve sufficient purpose as a concentration measurer capable of measuring up to a high concentration. In particular, in the random arrangement form, a high output could be obtained, and at the same time, a linear property capable of measuring up to a higher concentration could be obtained, and an extremely excellent property for a high-concentration measurement, which had not been achieved in a conventional measurer, could be obtained.

Although a glass plate was attached onto the sensing surface in the above-described experiment, as aforementioned, it is possible to use a plano-convex lens having a certain focal length instead of the glass plate, and even in such a case, an excellent property similar to that shown in Fig. 9 can be obtained.

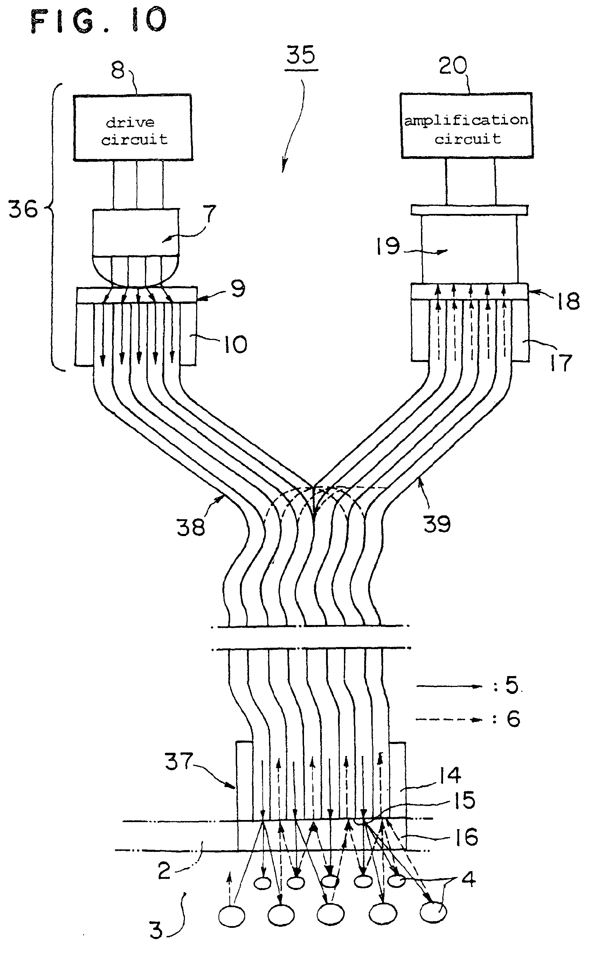

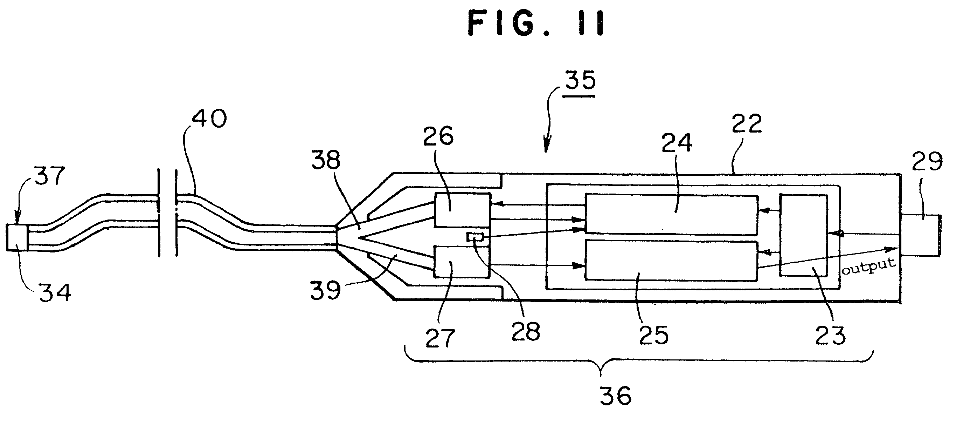

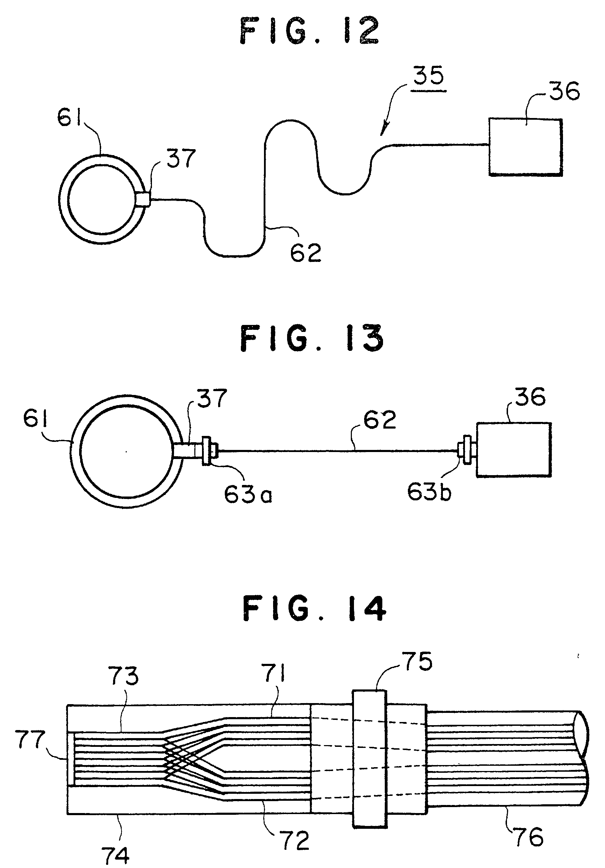

Fig. 10 shows a basic structure of a concentration measurer according to a second embodiment of the present invention, Fig. 11 shows an example in which the measurer is concretely structured, and Fig. 12 shows an example for disposing a concentration detecting part and a body part of the concentration measurer, respectively. As the arrangement form of optical fibers in the sensing surface, the respective arrangement forms shown in Figs. 3 to 6 can be employed.

Since concentration measurer 35 according to this embodiment shown in Figs. 10 and 11 basically has a structure equivalent to that shown in Figs. 1 and 2, the corresponding portions are indicated by the same symbols as those in Figs. 1 and 2.

In concentration measurer 35 according to this embodiment, a body part 36 including respective elements for laser beam emission and respective elements for laser beam receiving, and a concentration detecting part 37, are structured separatedly from each other, and both parts are connected by many bundled optical fibers for beam emission 38 and optical fibers for beam receiving 39 provided as flexible optical fibers. These optical fibers for beam emission 38 and optical fibers for beam receiving 39 extend between body part 36 and concentration detecting part 37. As shown in Fig. 11, these flexible optical fibers for beam emission 38 and optical fibers for beam receiving 39 are contained in a flexible protecting tube 40 at a position between body part 36 and concentration detecting part 37, and they are structured in a form of long extending flexible optical fiber cable. The laser beam emitter portion, the laser beam emission circuit, the laser beam receiver portion and the receiving beam amplification circuit have the same structures as those shown in Fig. 2.

Fig. 12 schematically shows an example of disposition in a case where, for example, concentration measurer 35 structured as shown in Fig. 11 is used for concentration measurement of sludge (Example 1). The above-described small concentration detecting part 37 is attached to a pipe wall of a sludge pipe 61, and body part 36 separated therefrom is disposed in a separate safe place in a good environment. The concentration detecting part 37 and the body part 36 are connected by the long extending flexible optical fiber cable 62. As to this optical fiber cable 62, if the transmission loss due to the inside optical fibers is less than a certain level, a fairly long cable can be used. Since the transmission loss of an optical fiber is generally very small, as the length of optical fiber cable 62, a cable with a length of about 100 m can be used for concentration measurement with no problem, and as the case may be, it is possible to extend the cable at a length up to several kilometers.

In concentration measurer 35 structured as described above, concentration detecting part 37 and body part 36 are completely separated from each other. As the concentration detecting part 37 may form only a sensing surface in which the ends of optical fibers are arranged in a predetermined arrangement form, it can be structured as a very small member, and therefore, as shown in Fig. 12, it is possible to attach the part easily even at a place in an adverse environment and requiring a long time for the attachment such as a sludge pipe 61, and even in a case having a narrow space for working. After once attached, because the part does not have adjustment equipment, etc., a frequent maintenance is not necessary, and as the case may be, a maintenance free condition becomes possible.

Further, a signal detected by this concentration detecting part 37 may be transmitted by optical fiber cable 62, the optical fiber cable 62 is flexible and can be freely extended even in a relatively complicated route, and besides, because there is no problem in performance even if it extends fairly long, the concentration detecting part 37 can be easily installed at a desired position, even at a place where a conventional measurer is hard to be disposed, for example, an underground water storage tank, a slurry storage tank, a sludge sedimentation tank, etc.

On the other hand, since body part 36 is connected to the above-described concentration detecting part 37 via flexible and long optical fiber cable 62, there is not a restriction at all of its installation place or installation posture. Therefore, the body part 36 including optical devices and electronic/electric circuits can be installed in a good environment, and can be installed freely in a place which is safe and where the adjustment and the maintenance can be easily performed. Consequently, good operations of the respective devices and circuits of body part 36 can be surely maintained, and the sensitivity and performance for the measurement as the whole of the concentration measurer 35 can be ensured for a long term.

Although concentration detecting part 37 and body part 36 are connected directly by optical fiber cable 62 in the first example shown in Fig. 12, as a second example is shown in Fig. 13, optical connectors 63a and 63b may be provided at both ends of the optical fiber cable 62 and the cable 62 may be connected to the concentration detecting part 37 and the body part 36 via the optical connectors 63a and 63b. In such a structure, there is an advantage that an installation working in the field can be minimized. It is also possible to provide the optical connector only at any one end of optical fiber cable 62.

Further, with respect to disposition of optical fibers, it is possible to reduce the working and the cost. For example, in a third example shown in Fig. 14, a concentration detecting part 74 having a random arrangement portion 73, in which optical fibers for beam emission 71 and optical fibers for beam receiving 72 are randomly arranged, is connected to an optical fiber cable 76 via an optical connector 75. In the random arrangement of optical fibers for beam emission 71 and optical fibers for beam receiving 72, the random arrangement portion 73 is formed only within a region as short and little as possible at a side of sensing surface 77 in the concentration detecting part 74, and therefrom, the optical fibers for beam emission 71 and the optical fibers for beam receiving 72 are separatedly branched out at a divergent state. When the optical fibers are randomly arranged, as compared with a case of separation arrangement, the working for arrangement is troublesome, thereby increasing the cost. Therefore, as shown in Fig. 14, by decreasing the random arrangement portion 73 as little as possible, the working for arrangement can be reduced and the cost for manufacture can be decreased. This method can also be applied to the cases of concentric and semicircular arrangements as shown in Figs. 4 to 6.

Furthermore, although the concentration detecting part and the body part, as shown in Figs. 10, 11, 12 and 13, are provided at a condition of one to one, in the present invention, it is possible, as required, to detect signals sent from a plurality of concentration detecting parts installed at different places by a single body part. For example, it becomes possible to measure the concentrations corresponding to respective concentration detecting parts by arranging parallel optical fiber cables from the respective concentration detecting parts to the body part or by connecting divergent optical fiber cables to the respective concentration detecting parts from a main optical fiber cable via an optical selector and setting the measurement wavelengths at the respective concentration detecting parts to be different from each other.

For example, as a fourth example is shown in Fig. 15, concentration detecting parts 82a ··· 82n are provided to a plurality of sludge pipes 81a ··· 81n, respectively, optical fiber cables 83a ··· 83n are connected to the respective concentration detecting parts 82a ··· 82n in parallel to each other, and these optical fiber cables 83a ··· 83n are connected to a single body part 84. As compared with a case for installing a plurality of body parts, because the sludge concentrations in the respective sludge pipes 81a ··· 81n can be concentratively monitored by one body part 84, the monitoring is easy, and further, it can also be possible to facilitate the installation of the body part 84, to decrease the space for the installation, and to reduce the cost for manufacturing the body part 84.

Further, as a fifth example is shown in Fig. 16, concentration detecting parts 92a ··· 92n are provided to a plurality of sludge pipes 91a ··· 91n, respectively, divergent optical fiber cables 93a ··· 93n are connected to the respective concentration detecting parts 92a ··· 92n in parallel to each other, these divergent optical fiber cables 93a ··· 93n are connected to an optical selector 94 to once collect the detected optical signals, and the optical selector 94 is connected to a body part 96 via a single main optical fiber cable 95 or a plurality of main optical fiber cables having a number less than that of the divergent optical fiber cables. By setting the measurement wavelengths at the respective concentration detecting parts 92a ··· 92n to be different from each other and by switching a signal being sent to the body part 96 by the optical selector 94, it becomes possible to measure the concentrations corresponding to the respective concentration detecting parts by the body part 96. Since the frequency of the measurement of sludge concentration may not be so high in most cases, by employing such a structure, a required function for concentration measurement can be ensured, and at the same time, reduction of the cost of the whole of the system becomes possible.

### Industrial Applications of the Invention

The concentration measurer according to the present invention can be suitably used particularly for measurement of sludge concentration, because it can measure up to a high concentration of turbidities with a high sensitivity. Further, if a concentration detecting part and a body part are structured separatedly from each other and they are connected by a long flexible optical fiber cable, the concentration detecting part directly detecting a concentration can be easily installed even in a narrow place or an adverse environment, and a system suitable for measurement of sludge concentration, etc. can be formed.

## Claims

1. A concentration measurer for measuring a concentration of turbidities in an object liquid by detecting a diffuse reflection light of a laser beam emitted to the object liquid, **characterized in that** a single concentration detecting part is formed by bundling a plurality of optical fibers for laser beam emission and a plurality of optical fibers for laser beam receiving.

2. The concentration measurer according to claim 1, wherein optical fibers of a total of 100 or more threads are bundled.

3. The concentration measurer according to claim 1, wherein at a sensing surface of said concentration detecting part said optical fibers for beam emission and said optical fibers for beam receiving are randomly arranged.

4. The concentration measurer according to claim 1, wherein at a sensing surface of said concentration detecting part said optical fibers for beam emission are arranged in a central portion of the sensing surface and said optical fibers for beam receiving are arranged around said optical fibers for beam emission.

5. The concentration measurer according to claim 1, wherein at a sensing surface of said concentration detecting part said optical fibers for beam receiving are arranged in a central portion of the sensing surface and said optical fibers for beam emission are arranged around said optical fibers for beam receiving.

6. The concentration measurer according to claim 1, wherein at a sensing surface of said concentration detecting part said optical fibers for beam emission are arranged in a half of the sensing surface and said optical fibers for beam receiving are arranged in the other half of the sensing surface.

7. The concentration measurer according to claim 1, wherein said laser beam is supplied to said optical fibers for beam emission by pulse driving.

8. The concentration measurer according to claim 1, wherein a body part having at least an emitter and a receiver for said laser beam and said concentration detecting part directly emitting said laser beam to said object liquid and directly receiving a reflected light from said object liquid are formed separately from each other, and said body part and said concentration detecting part are connected to each other by flexible optical fibers.

9. The concentration measurer according to claim 8, wherein said flexible optical fibers are incorporated into a flexible tube.

10. The concentration measurer according to claim 8, wherein said body part has a laser beam emission circuit connected to said emitter and a received light amplification circuit connected to said receiver.
